(19) Europäisches Patentamt
European Patent Office
Office européen des brevets

(11) **EP 3 261 161 A1**

(12) **EUROPEAN PATENT APPLICATION**

(43) Date of publication:
**27.12.2017 Bulletin 2017/52**

(51) Int Cl.:
***H01M 10/04*** *(2006.01)*     ***H01M 10/42*** *(2006.01)*
***H01M 16/00*** *(2006.01)*

(21) Application number: **16175683.8**

(22) Date of filing: **22.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft**
**80333 München (DE)**

(72) Inventors:
• **BALAZS, Gergely György**
**1034 Budapest (HU)**
• **DEBRECENI, Tibor**
**5700 Gyula (HU)**

(74) Representative: **Maier, Daniel Oliver**
**Siemens AG**
**Postfach 22 16 34**
**80506 München (DE)**

(54) **BATTERY ENERGY STORAGE SYSTEM**

(57) The invention refers to a battery energy storage system including two rechargeable battery packs (EP,PP) which are connected in parallel for the purpose of supplying electrical energy to a load (L) if one of the battery packs fails. For allowing fulfillment of power demand, energy demand, voltage demand, mass and volume limits, voltage level and redundancy, without making use of a converter between the two battery packs, the first battery (PP) pack has higher volumetric and/or gravimetric power density and lower volumetric and/or gravimetric energy density than the second battery pack (EP).

FIG 1

**Description**

FIELD OF THE INVENTION

The present invention relates to a battery energy storage system including two rechargeable battery packs which are connected in parallel for the purpose of redundancy, so if failures occur in one battery pack the other battery pack remains active, and can deliver supply for the load. Of course such a battery energy storage system can contain more than one such pair of battery packs.

STATE OF THE ART

With the increasing number of energy storage systems using lithium-based batteries safety, reliability and high performance are becoming more and more important. In the technical specification of such battery energy storage systems (BESS) the most important technical requirements are power demand, energy demand, voltage demand, mass and volume limits, voltage level and redundancy.

It often is not possible to fulfill all these technical requirements for a single battery energy storage system due to battery cell behavior. So in practice almost for all design considerations at least two of these requirements should be specified and strictly fixed in order to satisfy the claims. The most frequent variations are when either all technical items are fulfilled excluding the redundancy or when all technical items are achieved except that the mass and/or volume limits are exceeded. Redundancy here refers to a kind of separated structure within the battery energy storage system and not to the doubling of the total battery energy storage system as such in its original size. This separated structure has at least two parts which work together in normal operation mode. If a pre-defined failure occurs in one part the other part remains active and can deliver - not total, but reduced - supply for the load.

If however all technical requirements above have to be fulfilled for a battery energy storage system, a new structure or configuration is needed.

At the moment there exist two basic solutions: according to a first solution the battery energy storage system includes a battery pack part and a supercapacitor pack part connected in parallel to the battery pack part. This solution only fulfills the energy and power demands but is not redundant. In case of failure of the battery pack the supercapacitor pack cannot provide energy reserve considering the same mass and volume limits of battery cells because supercapacitors normally have 10 times lower gravimetric and volumetric energy density parameter than battery cells.

Regarding redundancy there are solutions where the battery energy storage system contains two battery packs connected in parallel through power converters like a DC/DC converter or an electric motor used as a generator. This way all above mentioned requirements can be fulfilled but still this solution is difficult to realize: The converters should have control units which are complex and prone to failure. Due to the converters the lifetime and the efficiency of the battery energy storage system is decreased and additional maintenance is necessary.

SUMMARY OF THE INVENTION

One object of the present invention is to provide a battery energy storage system including two rechargeable battery packs which are connected in parallel for the purpose of supplying electrical energy to a load if one of the battery packs fails, which battery energy storage system allows fulfillment of power demand, energy demand, voltage demand, mass and volume limits, voltage level and redundancy, and which additionally does not make use of a converter between the two battery packs.

According to the present invention this object is achieved in that the first battery pack has higher volumetric and/or gravimetric power density and lower volumetric and/or gravimetric energy density than the second battery pack The second battery pack has, in turn, higher volumetric and/or gravimetric energy density and lower volumetric- and/or gravimetric power density than the first battery pack. It is a matter of the requirements of a certain application whether volumetric or gravimetric density parameters are more important to be considered.

In safety-critical systems (e.g. in electric vehicles, or in energy supply systems where interruption is not allowed, etc.) all the five mentioned technical requirements are expected to be fulfilled. According to the invention, this can be solved without using power converters, by using two different battery packs which are built-up by different battery cell types and which are connected in parallel through their connection circuits which only contain relays and measurement devices. This provides a solution which is not complex but cost efficient in comparison with the existing solutions.

Power density is the amount of power per unit. Power density can refer to a mass, then it is called gravimetric power density or specific power and is measured in W/kg, or to a volume, then it is called volumetric power density or simply power density and is measured in $W/m^3$ or W/l. Power density is an important consideration where space is constrained.

Energy density is the amount of energy per unit. Energy density can refer to a mass, then it is called gravimetric energy density or specific energy and is measured in Wh/kg, or to a volume, then it is called volumetric energy density or simply energy density and is measured in $Wh/m^3$ or Wh/l. Energy density is an important consideration where space is constrained.

When comparing different battery packs one will compare volumetric density values with volumetric density values or gravimetric density values with gravimetric density values.

According to the invention, a density difference between first and second battery pack is not due to production tolerances of the single batteries but is designed. So a density difference between first and second battery pack according to the invention usually is more than 5% of the lower value, presumably more than 10%.

So in a preferred embodiment of the invention volumetric and/or gravimetric energy density in the second battery pack is at least 5%, preferably at least 10% higher than in the first battery pack. In other words, there are three possibilities: In the first case energy density generally (that is volumetric and gravimetric energy density) in the second battery pack is at least 5% higher than in the first battery pack. In the second case only volumetric energy density in the second battery pack is at least 5% higher than in the first battery pack whereas gravimetric energy density is less than 5% higher or even lower than in the first battery pack. In the third case only gravimetric energy density in the second battery pack is at least 5% higher than in the first battery pack whereas volumetric energy density is less than 5% higher or even lower than in the first battery pack.

In turn, volumetric and/or gravimetric power density in the first battery pack can be at least 5%, preferably at least 10% higher than in the second battery pack. Again, in other words, there are three possibilities: In the first case power density generally (that is volumetric and gravimetric power density) in the first battery pack is at least 5% higher than in the second battery pack. In the second case only volumetric power density in the first battery pack is at least 5% higher than in the second battery pack whereas gravimetric power density is less than 5% higher or even lower than in the second battery pack. In the third case only gravimetric power density in the first battery pack is at least 5% higher than in the second battery pack whereas volumetric power density is less than 5% higher or even lower than in the second battery pack.

It is of advantage for the functioning of the battery energy storage system that is for the co-working of the two battery packages, if the battery cells of both battery packs belong to the same electrochemical system, that is, they have the same chemical composition of the battery, which also implies a nominal voltage. Battery cells are defined e.g. by their electrode(s): lithium-ion battery (e.g. lithium cobalt oxide battery (ICR), lithium ion manganese oxide battery (IMR), lithium ion polymer battery, lithium iron phosphate battery, lithium-sulfur battery, lithium-titanate battery, thin film lithium-ion battery), zinc-bromine battery, lead-acid battery, lithium air battery, magnesium-ion battery, just to name a few.

In a specific embodiment of the invention both battery packs consist of lithium-ion battery cells.

In the energy pack the volumetric and gravimetric energy densities are set by a certain number of parallel and series connected battery cells regarding the energy density parameters of the battery cells. In the power pack, in turn, the volumetric and gravimetric power densities are set by certain number of parallel and serial connected battery cells regarding the power density parameters of the battery cells. Concerning the voltage requirements of the load and also using the same battery cell technologies (e.g.: lithium-ion), the same number of series connections are used in the battery packs.

The main advantage of the system according to the invention is that this mixed and redundant configuration can supply systems that have both high energy- and high power demand requirements, e.g. drive or photovoltaic power systems. A higher volumetric and/or gravimetric total power and/or energy density can be achieved than in case of the existing energy storages, with significantly less total volume and/or mass. This structure provides redundancy, so if failure occurs in one subsystem, the other subsystem remains active, and can deliver - well-defined, reduced - supply for a load, which is not just a benefit, but even criterion in safety-critical systems. There is no need for additional power converters like DC/DC converter or electric motor used as generator.

BRIEF DESCRIPTION OF FIGURES

The invention will be explained in closer detail by reference to a preferred embodiment, which is depicted schematically in the figures.

Fig. 1    shows a schematic electric circuit of a battery energy storage system according to the invention,

Fig. 2    shows a schematic equivalent circuit of the battery energy storage system of claim 1 in normal operation mode,

Fig. 3    shows a schematic equivalent circuit of the battery energy storage system of claim 1 in failure operation mode.

WAYS TO IMPLEMENT THE INVENTION

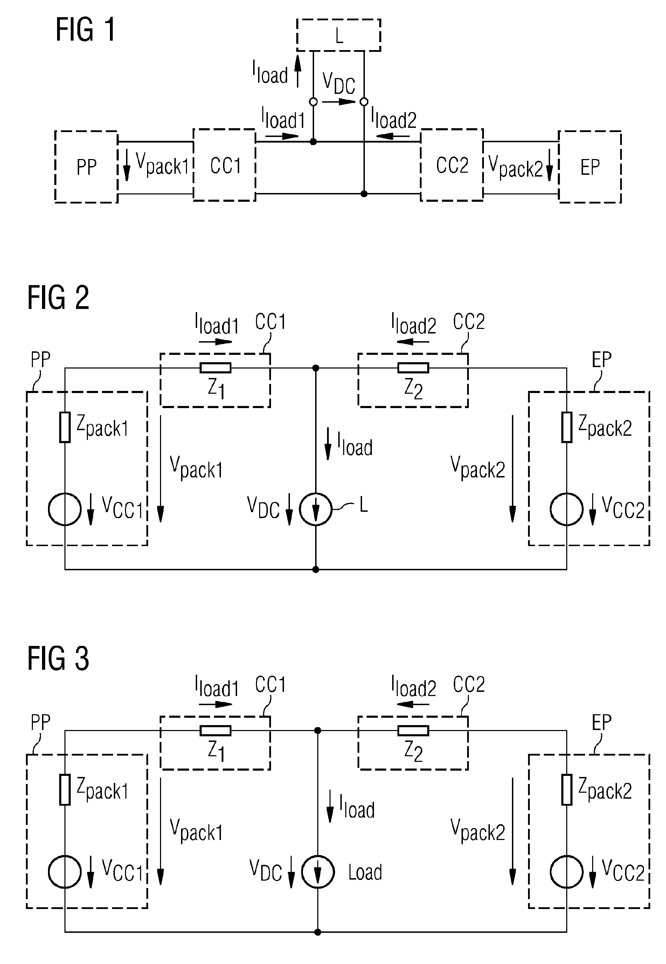

Fig. 1 shows the electric circuit of a battery energy storage system according to the invention. The fulfillment of technical requirements is provided by the two different battery packs EP,PP which result in a mixed and redundant configuration. In Fig. 1 the first battery pack PP is called "Power Pack" because it is built-up by battery cells which have high volumetric and/or gravimetric power density parameter(s), but their energy density parameters have just secondary priority. In contrast with it, the second battery pack EP is called "Energy Pack" because it is built-up by battery cells that have high volumetric and/or gravimetric energy density parameter(s), but the power density parameters have just secondary priority. The battery cells in the "Power Pack" and the battery cells in the "Energy Pack" have the same chemistry, for example lithium-ion, for ensuring the same voltage levels and limits.

The proper voltage level of the battery packs EP,PP is ensured by the series number of battery cells, that is the number of battery cells connected in series, which number is the same for both battery packs EP,PP. The power and energy requirements are ensured together by the parallel number of battery cells in the two battery packs EP,PP based on the series number. This results in a redundant topology. So if failures occur in one battery pack (and no matter if it is the first PP or the second battery pack EP), the other battery pack remains active, and can deliver supply for the load L. Higher volumetric and/or gravimetric total power and/or energy density can be achieved than in case of the existing energy storages, with significantly less total volume and/or mass.

The first battery pack PP is able to deliver a voltage $V_{pack1}$ to a load L via a first connection circuit CC1. The second battery pack EP is able to deliver a voltage $V_{pack2}$ to the same load L via a second connection circuit CC2. Both connection circuits CC1,CC2 contain - beside wiring - only relays and measurement devices as components, and no converters or generators. The connection circuits CC1,CC2 are connected to each other so that a load current $I_{load1}$ of the first battery pack PP and a load current $I_{load2}$ of the second battery pack EP add up to a load current $I_{load}$ which is delivered to the load L with a voltage $V_{DC}$.

A case study has been concluded where the fixed technical specification parameters were the power demand and the energy demand. The aim was to compare the mixed and redundant system according to the invention to a known energy storage system. Therefore, in the known system the selected lithium-ion battery cell, which is used for both battery packs, has both sufficient energy and power density parameters. The results show that the mixed and redundant system can fulfill the requirements with significantly less total volume and/or mass.

The following equations describe the operation with relation to Fig. 2.

$$V_{DC}(t) = V_{pack1}(t) - I_{load1}(t) \cdot Z_1 = V_{pack2}(t) - I_{load2}(t) \cdot Z_2 \quad (Eq. 1)$$

$$I_{load}(t) = I_{load1}(t) + I_{load2}(t) \quad (Eq. 2)$$

$$I_{load1}(t) = (I_{load}(t) \cdot (Z_{pack2} + Z_2)/(Z_{pack2} + Z_2 + Z_{pack1} + Z_1)) - I_{balancing}(t) \quad (Eq. 3)$$

$$I_{load2}(t) = (I_{load}(t) \cdot (Z_{pack1} + Z_1)/(Z_{pack2} + Z_2 + Z_{pack1} + Z_1)) + I_{balancing}(t) \quad (Eq. 4)$$

$$I_{balancing}(t) = (V_{pack2}(t) - V_{pack1}(t))/(Z_1 + Z_2) \quad (Eq. 5)$$

$Z_1$ is the summation impedance of the elements of the first connection circuit CC1 and the impedance of cablings in this subsystem.
$Z_2$ is the summation impedance of the elements of the second connection circuit CC2 and the impedance of cablings in this subsystem.
$Z_{pack1}$ is the summation internal impedance of the first battery pack PP.
$Z_{pack2}$ is the summation internal impedance of the second battery pack EP.

During normal operation mode, see Fig. 1 and Fig. 2, the two battery packs EP,PP are loaded and discharged in the rate based on Eq. 3 and Eq. 4. In this case, the absolute value of the balancing current ($I_{balancing}$) flowing between the two battery packs (see Eq. 5 above) is greater than zero.

In the failure operation mode, see Fig. 3, when the first battery pack PP is disconnected from the other battery pack EP and the load L by its connection circuit CC1, the remaining battery pack EP is loaded by the full load current $I_{load}$ through its connection circuit CC2. In this case, the balancing current $I_{balancing}$ is zero.

In the case study two battery energy storage systems, namely each system having two battery packs, have been compared. The first battery energy storage system according to the invention comprises an "Energy Pack" and a "Power Pack" connected in parallel. The second battery energy storage system according to prior art comprises two "Normal Packs" connected in parallel. Both battery energy storage systems consist of lithium-ion battery cells. The characteristics of the battery cells of the three different battery packs are shown in Table 1:

Table 1

| Parameter of one battery cell | 1st system "Power Pack" | 1st system "Energy Pack" | 2nd system "Normal Pack" |
|---|---|---|---|
| Nominal capacity [Ah] | 5.00 | 3.35 | 2.60 |
| Nominal voltage [V] | 3.70 | 3.60 | 3.60 |
| Maximum weight [g] | 132.00 | 47.50 | 44.30 |
| Maximum volume [l] | 0.0725 | 0.0169 | 0.0173 |
| Nominal gravimetric power density [kW/kg] | 4.20 | 0.51 | 1.63 |
| Nominal volumetric power density [kW/l] | 7.65 | 1.44 | 4.16 |
| Nominal gravimetric energy density [Wh/kg] | 140.15 | 254.00 | 211.30 |
| Nominal volumetric energy density [Wh/l] | 255 | 718 | 541 |

The power density parameters of the battery cells of the "Power Pack" are much greater than of the "Energy Pack's" battery cells. Here a "Power Pack" battery cell has a gravimetric power density parameter which is approximately 8 times the parameter of the "Energy Pack's" battery cell. And the "Power Pack" battery cell has a volumetric power density parameter which is approximately 5 times the parameter of the "Energy Pack's" battery cell. In opposite to this, the energy density parameters of the battery cells of the "Energy Pack" are much greater than of the "Power Pack's" battery cells. In this example an "Energy Pack" battery cell has a gravimetric energy density parameter which is approximately 1.8 times the parameter of the "Power Pack's" battery cell. And the "Energy Pack" battery cell has a volumetric energy density parameter which is approximately 2.8 times the parameter of the "Power Pack's" battery cell.

The battery cells of the second battery energy storage system and the design of the second battery energy storage system have been chosen so that both nominal power and nominal energy storage capacity parameters reach at least the values of the first battery energy storage system. Accordingly, power and energy density parameters of the battery cell of the second battery energy storage system lie between the values of "Power Pack's" and "Energy Pack's" battery cells.

The "Power Pack" and the "Energy Pack" of the first battery energy storage system according to the invention consists of battery cells according to table 1. Each battery pack has 108 battery cells connected in series. The "Power Pack" has 4 battery cells connected in parallel, the "Energy Pack" has 10 battery cells connected in parallel. The resulting data for the "Power Pack" and the "Energy Pack" are listed in table 2:

Table 2

| Parameter of one battery pack | 1st system "Power Pack" | 1st system "Energy Pack" |
|---|---|---|
| Nominal capacity [Ah] | 20 | 33.5 |
| Maximum weight [kg] | 57 | 51.3 |
| Maximum volume [l] | 31.32 | 18.252 |
| Nominal power [kW] | 239.76 | 26 |

(continued)

| Parameter of one battery pack | 1st system "Power Pack" | 1st system "Energy Pack" |
|---|---|---|
| Nominal storage capacity [kWh] | 7.78 | 13 |

The resulting data of the first battery energy storage system according to the invention, consisting of one "Power Pack" and of one "Energy Pack", are compared to the data of the second battery energy storage system according to prior art, consisting of two "Normal Packs", in table 3:

Table 3

| Parameter of one system | 1st system | 2nd system |
|---|---|---|
| Parallel number of cells [] | 4 + 10 | 34 |
| Series number of cells [] | 108 | 108 |
| Nominal capacity [Ah] | 53.50 | 88.40 |
| Nominal power [kW] | 265.76 | 264.40 |
| Nominal storage capacity [kWh] | 20.78 | 34.37 |
| Maximum weight [kg] | 108.30 | 162.67 |
| Maximum volume [l] | 49.57 | 63.53 |
| Power density [kW/kg] | 2.45 | 1.62 |

As can be seen from table 3, the bottleneck of the second system was the nominal power. The resulting minimal parallel number of battery cells is 34. This way the weight of the second system becomes approximately 1.5 the weight of the first system according to the invention. Also the volume of the second system gets 1.3 times higher than the weight of the first system.

LIST OF REFERENCE SIGNS

| | |
|---|---|
| CC1 | first connection circuit |
| CC2 | second connection circuit |
| EP | second battery pack ("Energy Pack") |
| $I_{load}$ | load current |
| $I_{load1}$ | load current of first battery pack PP |
| $I_{load2}$ | load current of second battery pack PP |
| L | load |
| PP | first battery pack ("Power Pack") |
| $V_{DC}$ | voltage for the load L |
| $V_{OC1}$ | equivalent voltage of first battery pack PP |
| $V_{OC2}$ | equivalent voltage of second battery pack EP |
| $V_{pack1}$ | voltage of first battery pack PP |
| $V_{pack2}$ | voltage of second battery pack EP |
| $Z_1$ | equivalent impedance of first connection circuit |
| $Z_2$ | equivalent impedance of second connection circuit |
| $Z_{pack1}$ | equivalent impedance of first battery pack PP |
| $Z_{pack2}$ | equivalent of second battery pack EP |

**Claims**

1. Battery energy storage system including two rechargeable battery packs (EP,PP) which are connected in parallel for the purpose of supplying electrical energy to a load (L) if one of the battery packs fails, **characterized in that** the first battery pack (PP) has higher volumetric and/or gravimetric power density and lower volumetric and/or gravimetric energy density than the second battery pack (EP).

2. Battery energy storage system according to claim 1, **characterized in that** the energy density in the second battery pack (EP) is at least 5%, preferably at least 10% higher than in the first battery pack (PP).

3. Battery energy storage system according to claim 2, **characterized in that** either the gravimetric or the volumetric energy density in the second battery pack (EP) is at least 5%, preferably at least 10% higher than in the first battery pack (PP).

4. Battery energy storage system according to any of the preceding claims, **characterized in that** the power density in the first battery pack (PP) is at least 5%, preferably at least 10% higher than in the second battery pack (EP).

5. Battery energy storage system according to claim 5, **characterized in that** either the gravimetric or volumetric power density in the first battery pack (PP) is at least 5%, preferably at least 10% higher than in the second battery pack (EP).

6. Battery energy storage system according to any of the preceding claims, **characterized in that** battery cells of both battery packs (EP,PP) belong to the same electrochemical system.

7. Battery energy storage system according to any of the preceding claims, **characterized in that** both battery packs (EP,PP) consist of lithium-ion battery cells.

8. Battery energy storage system according to any of the preceding claims, **characterized in that** battery cells in at least one battery pack (EP,PP) are connected in series and in parallel.

FIG 1

FIG 2

FIG 3

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/055094 A1 (TAKAGI MASARU [JP] ET AL) 27 February 2014 (2014-02-27) * abstract; figure 1 * * paragraphs [0008], [0013], [0015], [0027] - [0031]; table 1 * ----- | 1-8 | INV. H01M10/04 H01M10/42 H01M16/00 |
| X | DE 10 2011 014811 A1 (DAIMLER AG [DE]) 6 October 2011 (2011-10-06) * abstract; figure 1 * * paragraph [0016] * ----- | 1 | |

TECHNICAL FIELDS
SEARCHED     (IPC)

H01M

The present search report has been drawn up for all claims

| Place of search | Date of completion of the search | Examiner |
|---|---|---|
| The Hague | 15 December 2016 | Chmela, Emil |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

EP 3 261 161 A1

## ANNEX TO THE EUROPEAN SEARCH REPORT
## ON EUROPEAN PATENT APPLICATION NO.

EP 16 17 5683

15-12-2016

| Patent document cited in search report | Publication date | Patent family member(s) | Publication date |
|---|---|---|---|
| US 2014055094 A1 | 27-02-2014 | CN 103518303 A<br>EP 2702662 A2<br>JP 5664446 B2<br>JP 2012235610 A<br>US 2014055094 A1<br>WO 2012146962 A2 | 15-01-2014<br>05-03-2014<br>04-02-2015<br>29-11-2012<br>27-02-2014<br>01-11-2012 |
| DE 102011014811 A1 | 06-10-2011 | NONE | |

EPO FORM P0459